# EUROPEAN PATENT APPLICATION

(11) **EP 1 388 412 A1**
(43) Date of publication of application: **11.02.2004**
(21) Application number: 03254803.4
(22) Date of filing: 31.07.2003
(51) Int. Cl.: B32B 15/08, F16L 9/12

(54) **Improvements in multilayered pipes**

(30) Priority: 06.08.2002 GB 0218217
(71) Applicant: GLYNWED PIPE SYSTEMS LIMITED, Sheldon, Birmingham B26 3AZ (GB)
(72) Inventor: Hill, David, Cannock Staffordshire, WS11 3NS (GB); Bull, Michael, Cannock Staffordshire, WS11 3NS (GB); Wilson, Keith, c/o Glynwed Pipe Systems Ltd., Cannock, Staffordshire, WS11 3NS (GB)
(74) Representative: Townsend, Victoria Jayne

(57) **Abstract**

A multi-layered pipe comprising an outermost layer 41, an innermost layer 43 and one or more middle layers 42 sandwiched between the innermost 43 and outermost 41 layer and an end surface 40 extending between an edge of the outermost layer 41 and an adjacent edge of the innermost layer 43, the end surface 40 completely enclosing the edge(s) of the one or more middle layer(s) 42 against the ingress of fluid which may be carried in the pipe.

## Description

This invention relates to multi-layered pipes and to novel pipe finishing methods which improve the resistance of the multi-layered pipe to individual layer corrosion or contamination and possible premature failure of the pipe.

For some applications it is desirable to use pipe comprising three or mote layers, for example, a pipe may comprise an outer layer and inner layer of extrudable polymer sandwiching a middle, metal layer such as Aluminium for added strength, Optionally, in addition one or more "tie"layers of a bonding material may be provided between the outer and middle and/or the inner and middle layers to improve bonding of the laminate.

In the prior art known to the applicants, multi-layered pipes are open at either end leaving each layer exposed to fluid carried in the pipe. In some circumstances, the fluid reacts with one or more of the middle layers of the multi-layer pipe and leads to delamination. As the pipe delaminates, the outer layer becomes subject to increasing proportions of the total internal fluid pressure. The outer layer is typically not engineered to cope with higher pressures in isolation and consequently may fail.

Other undesirable consequences of these open ended multi-layer pipes include the possible erosion or corrosion of metallic inner layers which may contaminate fluid (such as a domestic water supply) passing through the pipe.

These problems have been, to some extent, alleviated by the incorporation of mechanical fittings which seal on the inner and outer surface of the pipe substantially eliminating contact of the carried quid with the end of the multi-layer pipe. Such fittings are, however, cumbersome and complex to manufacture and often impede or restrict fluid flow through the pipe, they have also been found to be impractical for use with larger diameter pipe systems.

The present invention aims to provide a simpler, more cost effective, yet functionally effective solution to problems hereinbefore discussed for the prior art.

In accordance with the present invention there is provided a multi-layered pipe comprising an outermost layer, an innermost layer and one or more middle layers sandwiched between the innermost and outermost layer and an end surface extending between an edge of the outermost layer and an adjacent edge of the innermost layer, the end surface completely enclosing the edge(s) of the one or more middle layer(s) against the ingress of fluid which may be carried in the pipe.

Typically the innermost and outermost layers will comprise an extrudable polymeric material.
The end surface may be provided in a variety of forms, for example, in some embodiments, the edges of the innermost and outermost layers may be deformed to extend across the one or more edges of the one or more middle layers and meet. The deformed edges of the innermost and outermost layers are then joined or bonded together where they meet thereby enclosing the edges of the middle layer or layers. In such embodiments, the innermost and outermost layers may be provided to extend beyond the edges of the middle layer or layers, alternatively, material may be removed from the edges of the middle layer or layers to create an annular recess between the edges of the innermost and outermost layers to allow room for deformation of the edges of the innermost and outermost layers, though such a difference between the edges of the innermost and outermost layers and those of the middle layers may not be necessary where the materials of the innermost and outermost layers are sufficiently deformable to close the gap between the edges of the outermost and innermost layers.

In one example of such embodiments, an annular recess is provided between the innermost and outermost layers by removing material from the edges of the middle layer or layers. The ends of the outermost and innermost layers which now extend beyond the edges of the middle layer or layers are deformed by compression heating. The ends are brought into contact by a compression tool and are thermally bonded by compression heating.

In a second example, an annular recess is provided as for the first example, a chemical solvent compatible with the materials of the inner and outer layers is introduced between the two ends. The ends are deformed and pulled together by a compression tool. Whilst in compression the chemical solvent bonds the two ends together.

In a third example, the end of the pipe is heated to a temperature sufficient to soften the ends of the outermost and innermost layers. Material from the ends of these layers is mobilised over the ends of the middle layers and thermal fusion closes the gap between the two ends.

In alternative embodiments, an end surface may be provided in the form of a separate end piece which is secured between the edges of the innermost and outermost layers. This separate piece may be provided (without limitation) in the form of; an annular plug, a compression hoop, or a flat ring. The separate piece may be chemically or thermally bonded or otherwise fused with the innermost and outermost layers. In the case of the compression hoop, the arrangement may rely simply on the compression forces to secure and seal the end of the pipe. In the case of the annular plug, the arrangement may rely simply on a fluid proof press fit to secure and seal the ends of the pipe,

For the purposes of exemplification, some specific embodiments of the invention will now be further described with reference to the following figures in which;
Figure 1 illustrates in longitudinal cross section and end view a multi-layered pipe as known in the prior art;
Figure 2 illustrates progressive steps in delamination of a prior art multi-layered pipe of the type shown in Figure 1;
Figure 3 illustrates failure of a prior art pipe of Figure 1 or Figure 2 following delamination,
Figure 4 illustrates a first embodiment of the invention;
Figure 5 illustrates a second embodiment of the invention;
Figure 6 illustrates a third embodiment of the invention;
Figure 7 illustrates a fourth embodiment of the invention.

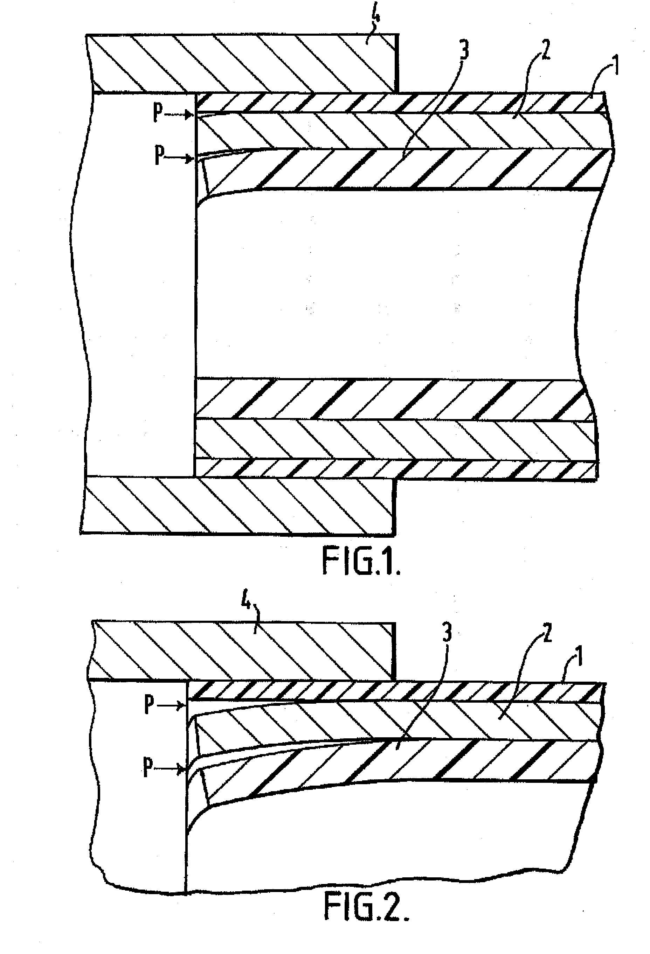

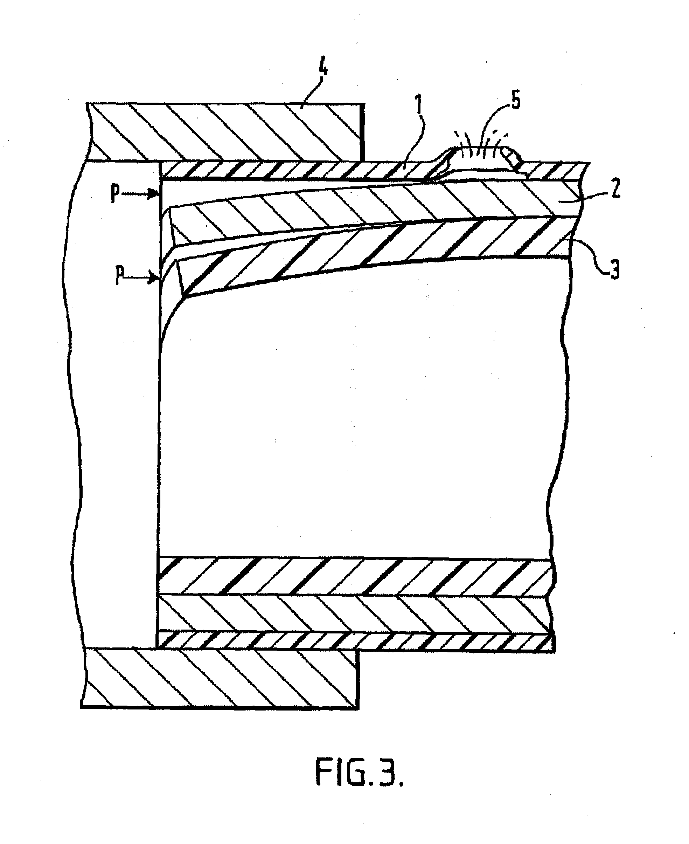

As can be seen in Figures 1, 2 and 3, a prior art multi-layered pipe comprises an outermost layer 1 an innermost layer 3 and, sandwiched between the outermost and innermost layer, a middle layer 2. The pipe is fitted in a system of pipework via a pipe connector 4. Fluid of internal pressure P flows through the pipe. The ends of each of the 3 layers are exposed to the fluid. After a period of time, the pressure P tends to cause separation of the layers 1, 2 and 3 at the exposed end of the pipe. Figure 2 illustrates the progression of delamination when the unchecked pipe of Figure 1 is exposed to fluid pressure P for a prolonged period. It will be understood that as more of the innermost 3 and middle 2 layers are delaminated from the outermost layer 1, the outermost layer 1 bears an increasingly greater load. At a critical point, the pressure at a point 5 along the length of the outermost layer 1 exerts a greater load than the material of that layer can bear and fracture occurs. This is illustrated in Figure 3,

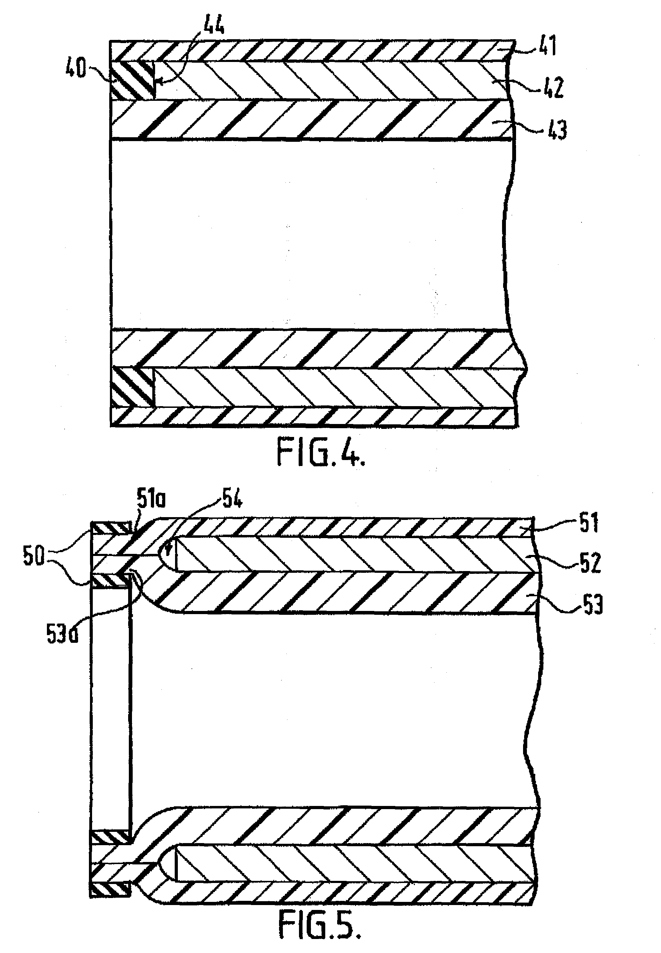

Figure 4 shows a first embodiment of a multi-layered pipe in accordance with the invention. As can be seen the pipe has an outermost layer 41, an innermost layer 43 and, sandwiched between the two, a middle layer 42, similar to the three layered structure shown in Figures 1, 2 and 3 . In contrast to the prior art pipe, the ends of the three layers 41, 42, 43 are not flush with one another. The middle layer 42 stops short of the innermost and outermost layers 41 and 43 providing an annular recess 44 defined by the ends of the innermost and outermost layers 41 and 43. Within the annular recess 44 is fitted an annular plug 40, typically of a rubber or otherwise elastically deformable material which can be press fit into the recess 44,

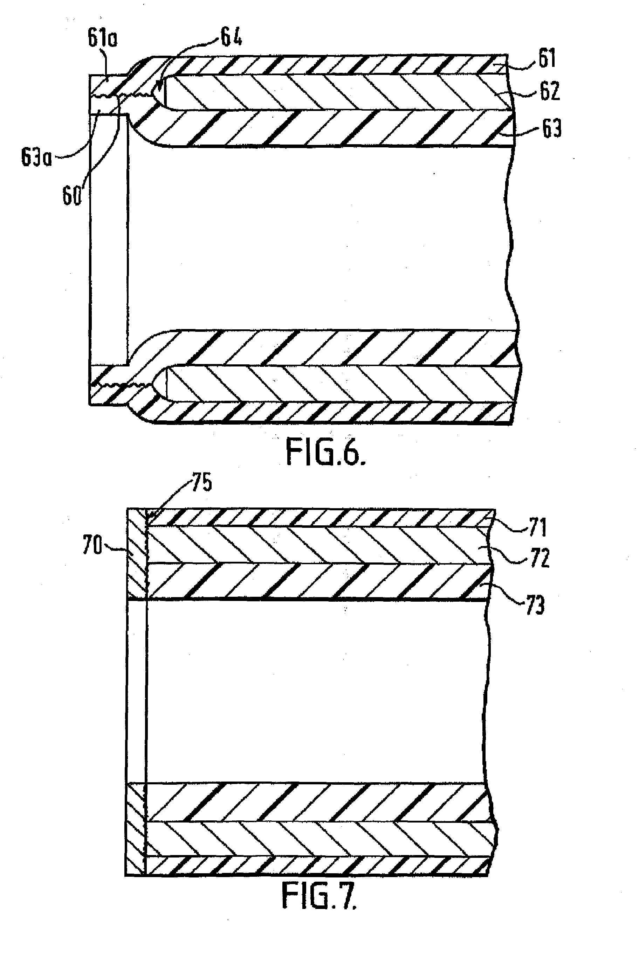

Figure 5 shows a second embodiment of the invention wherein a pipe comprises three layers an outermost 51, an inner most 53 and a middle layer 52 sandwiched between the innermost 53 and outermost 51. As with the embodiment of Figure 4, the end of the middle layer 52 falls short of the ends of the outermost 51 and innermost 53 layers to provide an annular recess 54. As can be seen in the Figure, the ends 51a and 53a of the innermost and outermost layers 51, 53 have been compressed together and are held in the compressed position by a compression hoop 50.

Figure 6 shows a third embodiment of the invention. As can be seen the embodiment is broadly similar to that of Figure 5 having three layers 61, 62, 63 corresponding to layers 51,52, 53 and an annular recess 64 corresponding to annular recess 54. In place of the compression hoop 50, the ends 61a, 63a of outermost and innermost layers 61 and 63 are bonded together by a bond 60 which may be chemical (eg adhesive) or physical (eg thermal fusion) in nature.

Figure 7 shows a fourth embodiment of the invention. The multi-layered pipe has three layers 71, 72, 73 which are of equal length and end at a common, flush surface much as shown for the prior art (prior to delamination). A flat ring/washer 70 with outer and inner diameter substantially the same as the pipe is bonded onto the flush surface by means of a chemical bonding layer 75. It is to be understood that other forms of bonding the flat ring to the flush surface may be utilised without detracting from the true scope of the invention.

Where thermal deformation or fusion are used to manufacture the pipe of the invention various methods already known in the prior art may be used, for example (but not strictly limited to); heat conduction (eg from a heating block or embedded wires), hot gas (eg air), gas combustion, friction (eg from a rotating or vibrating surface), exothermic heating, radiation (eg microwave or infra-red) or high frequency induction. Possible forms of deformation may include (but are not strictly limited to); forming in shaped dies, rolling (hot or cold), mechanical pinching or melt flow.

## Claims

1. A multi-layered pipe comprising an outermost layer (41), an innermost layer (43) and one or more middle layers (42) sandwiched between the innenmost (43) and outermost (41) layer and an end surface extending between an edge of the outermost layer (41) and an adjacent edge of the innermost layer (43), the end surface completely enclosing the edge(s) of the one or more middle layer(s) (42) against the ingress of fluid which may be carried in the pipe.

2. A multi-layered pipe as claimed in claim 1 wherein the innermost and outermost layers (41, 43) comprise an extrudable polymeric material.

3. A multi-layered pipe as claimed in claim 1 or claim 2 wherein the edges of the innermost and outermost layers (41,43) are deformed to extend across the one or more edges of the one or more middle layers and are joined or bonded together where they meet to form the end surface.

4. A multi-layered pipe as claimed in claim 3 wherein the extended edges of the innermost and outermost layers are joined together by a compression hoop (50).

5. A multi-layered pipe as claimed in claim 3 wherein the extended edges of the innermost and outermost layers are bonded together by a chemical bonding agent (60).

6. A multi-layered pipe as claimed in claim 3 wherein the extended edges of the innermost and outermost layers are bonded together by thermal fusion (60),

7. A multi-layered pipe as claimed in claim 1 or claim 2 wherein there is provided an annular recess (44)between the edges of the innermost and outermost layers in which is fitted an annular plug (40).

8. A multi-layered pipe as claimed in claim 7 wherein the annular plug (40) comprises rubber and/or another elastically deformable material.

9. A multi-layered pipe as claimed in claim 1 or claim 2 wherein the end surface is provided in the form of a flat ring (70) bonded to the edges of the innermost and outer most layers.

10. A multi-layered pipe as claimed in claim 9 wherein the flat ring (70) is bonded to the edges of the middle layer or layers as well as the edges of the innermost and outer most layers.

11. A multi-layered pipe as claimed in claim 9 or claim, 10 wherein the flat ring (70) is chemically bonded to the edges of the layers.

12. A multi-layered pipe as claimed in claim 9 or claim 10 wherein the flat ring (70) is thermally bonded to the edges of the layers.

13. A multi-layered pipe as claimed in claim 1 or claim 2 wherein material from the ends of the innermost and outermost layers have been mobilised over the ends of the middle layers under conditions of elevated temperature and are thermally fused to form the end surface.
